# EUROPEAN PATENT APPLICATION

(11) **EP 0 645 777 A1**
(43) Date of publication of application: **29.03.1995**
(21) Application number: 94115147.4
(22) Date of filing: 26.09.1994
(51) Int. Cl.: G21B 1/00

(54) **Cold nuclear fusion apparatus**

(30) Priority: 27.09.1993 JP 260463/93; 01.12.1993 JP 325772/93
(71) Applicant: CHIKUMA, Toichi, Tokyo (JP)
(72) Inventor: CHIKUMA, Toichi, Tokyo (JP)
(74) Representative: Leyh, Hans, Dr.-Ing.

(57) **Abstract**

A cold nuclear fusion apparatus which is high in industrial value in that the screening effect and a cooperative phenomenon are enhanced for a substance for nuclear fusion after occluded into an occlusion member to promote a nuclear fusion reaction and the time, the scale and so forth of occurrence of nuclear fusion can be controlled is disclosed. An excitation apparatus (10) for promoting a nuclear fusion reaction of a substance (25) for nuclear fusion occluded in a reactor (11) in a reaction vessel (26) from the outside is provided in close contact with a portion (11b) of the reactor (11). The excitation apparatus includes one or more of a battery (12), a magnetic flux generator (13), a heating unit (14), an ultrasonic wave generator (15), a laser light irradiation apparatus (16) and a high voltage discharging apparatus (17). Also a confinement apparatus for preventing the substance (25) for nuclear fusion occluded in the occlusion member (11) from escaping to the outside of the occlusion member (11) is provided.

## Description

This invention relates to a cold nuclear fusion apparatus wherein a substance for nuclear fusion is occluded into an occlusion member in a reaction vessel to cause a nuclear fusion reaction. It is to be noted that the occlusion member herein generically denotes any member which occludes a substance for nuclear fusion such as deuterium to cause a nuclear fusion reaction and may be constituted from a single substance (for example, palladium) or a plurality of substances (for example, ceramics) and may or may not itself construct an electrode.

It was claimed by two noted chemists, Martin Fleischmann and B. Stanley Pons, of the University of Utah in United States of America on March 23, 1989 that electrolysis had taken place using palladium foil for a cathode and platinum foil for an anode while deuterium was occluded into the palladium of the cathode for a long period of time, and as a result of the experiment, excessive heat, which is supposed to arise from a nuclear fusion reaction at room temperature, was obtained. In succession, it was published from the investigation group of Steven E. Jones et al, physicists of Brigham Young University in United States, that heavy water with salts added thereto had been accommodated into an electrolytic cell and occluded similarly into a cathode of titanium and palladium while electrolysis took place, and while generation of a large amount of heat had not been observed, neutrons which give indications of a nuclear fusion reaction were detected. Since then, various scientific controversies over cold nuclear fusion have been raised, and various reports of experiments have been published. The circumstances of them are disclosed in detail in F. David Peat, "Cold Fusion", Contemporary Books Inc., United States, 1989.

The theory that heavy water is occluded into palladium of a cathode and causes nuclear fusion is understood in the following manner.

Heavy water (D₂O) is ionized in an electric cell into D⁺ and OD⁻. Then, anions OD⁻ are attracted by an anode to produce oxygen. Meanwhile, cations D⁺ are attracted by a cathode of palladium and each given an electron to make a deuterium atom D. Since palladium has, due to its crystal structure, a hydrogen occluding characteristic of absorbing and catching hydrogen and deuterium, deuterium atoms are successively driven into the crystal of palladium. In this instance, electrodes of the deuterium atoms are discharged and are present together with electrons of palladium. The deuterium atomic nuclei from which electrons have been discharged enter and are settled among palladium atoms. Since deuterium atomic nuclei have positive charge, they repulse each other, but since electrons having negative charge in the inside of palladium can move freely, they gather around the deuterium atomic nuclei having positive charge. When electrodes having negative charge gather around deuterium atomic nuclei as the deuterium atomic nuclei are driven into the palladium, positive charge of deuterium atomic nuclei is screened (screening effect), and also a cooperative phenomenon wherein movements of atomic nuclei or electrons simultaneously proceed joins to weaken the repulsive force between the deuterium atomic nuclei. As a result, the deuterium atomic nuclei approach each other, and finally, a quantum tunneling effect takes place so that the deuterium atomic nuclei fuse by nuclear fusion. Here, it is considered that a screening effect by an aggregate of electrons having negative charge is an important factor which causes nuclear fusion. It is also important in order to assure a high nuclear fusion efficiency to prevent deuterium atomic nuclei approaching each other from separating from each other and to keep the approaching condition for a long period of time.

It is to be noted that, in addition to such a method which makes use of heavy water as described above, also a method which makes use of deuterium gas has been proposed (refer to, for example, Japanese Patent Laid-Open Application No. Heisei 2-293692).

However, most of investigation reports or proposed inventions till now are directed toward improvements in enhancement of the occlusion efficiency of heavy water into a cathode in the form of an occlusion member, but they do not have little intention to enhance the screening effect after occlusion.

While enhancement of the screening effect is not intended directly, one of methods which promote a nuclear fusion reaction in a cathode is disclosed in Japanese Patent Laid-Open Application No. Heisei 4-136786. According to the method, a mechanical external force which does not exceed an elastic limit of the cathode of palladium is applied to the cathode to induce fine cracks so that the frequency of occurrence of a nuclear fusion reaction may be increased by strong electrostatic fields appearing around the cracks.

With the method, however, since it cannot be estimated at all when fine cracks are produced and what number of and to which degree such cracks are produced, the time and the scale of occurrence of a nuclear fusion reaction cannot be controlled at all. Accordingly, the method is not practical in use.

Again, most of investigation reports or proposed inventions till now are directed toward enhancement of the occlusion efficiency of deuterium into a cathode in the form of an occlusion member, and they have little consideration over processing after occlusion. For example, where the occlusion member is palladium and the substance for nuclear fusion is deuterium, deuterium atoms are occluded into a metal grating of palladium, but since the magnitude of the grating is very great comparing with the magnitude of deuterium atoms, if occlusion into the metal grating does not thereafter take place successively and one-sidedly, there is the possibility that the deuterium atoms occluded once may escape from the metal grating. However, even the object to prevent such escapement has not conventionally been taken into consideration.

It is an object of the present invention to provide a cold nuclear fusion apparatus which is high in industrial value in that the screening effect and a cooperative phenomenon are enhanced for a substance for nuclear fusion after occluded into an occlusion member to promote a nuclear fusion reaction and the time, the scale and so forth of occurrence of nuclear fusion can be controlled.

It is another object of the present invention to provide a cold nuclear fusion apparatus which prevents escapement of a substance for nuclear fusion after occluded into an occlusion member from the occlusion member to enhance the occurrence efficiency of a nuclear fusion reaction.

In order to attain the objects described above, according to the present invention, there is provided a cold nuclear fusion apparatus, which comprises a reaction vessel, an occlusion member accommodated at least at a portion thereof in the reaction vessel for occluding a substance for nuclear fusion to cause a nuclear fusion reaction, and excitation means disposed in close contact with a portion of the occlusion member for promoting the nuclear fusion reaction of the substance for nuclear reaction occluded in the occlusion member from the outside. The excitation means may include one or more of a battery, a magnetic flux generator, a heating apparatus, an ultrasonic wave generator, a laser light irradiation apparatus and a high voltage discharging apparatus.

The excitation means provides, from the outside of the occlusion member, an environment which promotes nuclear fusion of, for example, deuterium atomic nuclei occluded in the occlusion member. In particular, where a battery is provided, it is considered that electrons having negative charge are provided also from the outside of the occlusion member and the amount of electrons which gather around the deuterium atomic nuclei increase as much, and the screening effect of screening positive charge of the deuterium atomic nuclei is enhanced to raise the occurrence efficiency of a nuclear fusion reaction. Meanwhile, where a magnetic flux generator is employed, electrons are collected by a magnetic force generated by the magnetic flux generator to enhance the screening effect. Further, where a heating apparatus or an ultrasonic wave generator is provided, it is estimated that the motion of deuterium atomic nuclei and electrons is rendered active by heat from the heating apparatus or electromagnetic oscillations by the ultrasonic wave generator to promote the cooperative phenomenon to raise the occurrence efficiency of a nuclear fusion reaction. Where a laser light irradiation apparatus is employed, laser light is irradiated upon the occlusion member, whereupon electrons are emitted by a photoelectric effect of the laser light, and the motion of electrons is rendered active to raise the screening effect. Further, the nuclear fusion reaction is promoted also by the energy of the laser light. Where a high voltage discharging apparatus is employed, abnormal current flows, due to discharging by the high voltage discharging apparatus, through the inside of the occlusion member to render the motion of electrons active, and it is also considered that fine cracks or the like are induced by an impact upon discharging. Where two or more of such battery, magnetic flux generator, heating apparatus, ultrasonic wave generator, laser light generation apparatus and high voltage discharging apparatus, synergetic effects can be anticipated. The timing, scale or the like of a nuclear fusion reaction can be controlled by adjusting the output, the magnitude or the like of the excitation means.

Where a portion of the occlusion member is disposed outside the reaction vessel, the excitation means may closely contact with the portion of the occlusion member outside the reaction vessel. Or, where the reaction vessel is provided by a pair together with the occlusion member, the occlusion members may be connected to each other outside the reaction vessels while the excitation means closely contacts with the connection portion between the occlusion members. Or else, where a portion of the occlusion member is exchangeable, the excitation means may closely contact with the exchangeable portion of the occlusion member. If the exchangeable portion of the occlusion member is damaged or deformed by nuclear fusion, only the exchangeable portion of the occlusion member can be exchanged.

Preferably, the cold nuclear fusion apparatus further comprises heat exchange means provided around the occlusion member in order to extract to the outside heat generated in the occlusion member. The heat exchange means may include a thermoelectric converter so that heat generated by nuclear fusion can be converted into and extracted as electric energy. Meanwhile, where the reaction vessel includes an electrolytic cell in which the occlusion member acts as a cathode, preferably the cold nuclear fusion apparatus further comprises reduction reaction means provided in the electrolytic cell for causing gas produced on the anode side of the electrolytic cell to react with gas produced on the cathode side by reduction reaction so that deuterium gas or hydrogen gas produced on the cathode side may not be discharged outside.

The occlusion member may be constituted from a plurality of occlusion substance wires or plates of different materials combined together. When stress is produced in the occlusion member, cracks can be induced by a difference in stress between the occlusion substance wires or plates.

The substance for nuclear fusion may be a mixture of water and heavy water or a mixture of high hydrogen gas and deuterium gas.

Preferably, the cold nuclear fusion apparatus further comprises confinement means for preventing the substance for nuclear fusion occluded in the occlusion member from escaping to the outside of the occlusion member so that the occurrence efficiency of a nuclear fusion reaction may be enhanced. Preferably, the confinement means includes a conductor layer formed on an outer periphery of the occlusion member, which acts as a cathode, with an electric insulator layer interposed therebetween, a voltage being applied such that the conductor layer acts as an anode. Alternatively, the confinement means may include a magnetic coil. Where the occlusion member is a cathode, the confinement means may include an anode in the form of a coil provided around the occlusion member.

The confinement means prevents, from the outside, the substance for nuclear fusion (where deuterium is employed, atoms and atomic nuclei of deuterium from which electrons have been emitted) occluded in the occlusion member from escaping to the outside of the occlusion member. Where a conductor layer is formed on an outer periphery of the occlusion member, which acts as a cathode, with an electric insulator layer interposed therebetween and a voltage is applied such that the conductor layer acts as an anode, since the atomic nuclei from which electrons have been discharged upon occlusion into the occlusion member, for example, the deuterium atomic nuclei, are charged in the positive, they are controlled from escaping to the outside of the occlusion member by an electrostatic repulsive action by the anode formed on the outer periphery of the occlusion member. Further, since the occluded deuterium atoms cannot move, in the occlusion member which is a solid body, as freely as in liquid or gas and are so packed in the occlusion member that it cannot move readily and besides the electric insulator layer serves as a barrier, they are prevented from escaping to the outside.

The above and other objects, features and advantages of the present invention will become apparent from the following description and the appended claims, taken in conjunction with the accompanying drawings in which like parts or elements are denoted by like reference characters.
FIG. 1 is a schematic view of an excitation unit which can be used with a cold nuclear fusion apparatus according to the present invention;
FIG. 2 is a schematic view of a cold nuclear fusion apparatus wherein the excitation unit of FIG. 1 is installed outside an electrolytic cell showing a first preferred embodiment of the present invention;
FIG. 3 is a schematic view of another cold nuclear fusion apparatus wherein the excitation unit of FIG. 1 is installed outside and between a pair of electrolytic cells showing a second preferred embodiment of the present invention;
FIG. 4 is a schematic view of a further cold nuclear fusion apparatus wherein the excitation unit of FIG. 1 is installed in the inside of a closed type electrolytic cell showing a third preferred embodiment of the present invention;
FIG. 5 is a schematic view of a still further cold nuclear fusion apparatus wherein the excitation unit of FIG. 1 is installed outside a closed type electrolytic cell showing a forth preferred embodiment of the present invention;
FIG. 6 is a schematic view of a yet further cold nuclear fusion apparatus wherein a closed cell in which gas is enclosed is used as a reaction vessel and the excitation unit of FIG. 1 is installed outside the closed cell showing a fifth preferred embodiment of the present invention;
FIG. 7 is a schematic view showing a modification to the excitation unit of FIG. 1;
FIG. 8 is a schematic view of a yet further cold nuclear fusion apparatus wherein an electric insulator layer and a conductor layer are formed as confinement means on an outer periphery of an electrode showing a sixth preferred embodiment of the present invention;
FIG. 9 is a schematic view of an electrode wherein an anode is used as confinement means;
FIG. 10 is a sectional view of an occlusion member formed by twisting or piling up a plurality of occluding substance wires or plates of different materials; and
FIG. 11 is a model diagram illustrating a nuclear fusion reaction where a mixture of water and heavy water or another mixture of light hydrogen gas and heavy hydrogen gas is employed as a substance for nuclear fusion.

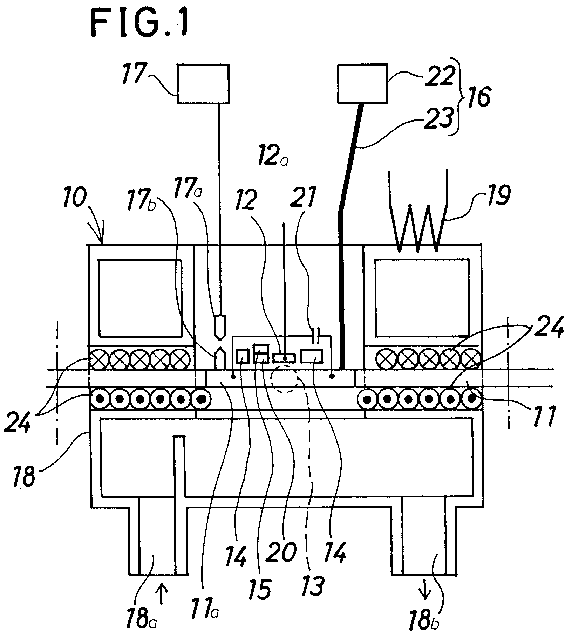

Referring first to FIG. 1, there is shown an excitation unit which is employed in a cold nuclear fusion apparatus according to the present invention. The excitation unit shown is generally denoted at 10 and is disposed such that it partially surrounds an electrode 11 which acts as an occlusion member. The electrode 11 is made of a metal having a property of occluding hydrogen or deuterium such as palladium or titanium or a ceramic material of a composition having a similar property. The excitation unit 10 includes a battery 12, a magnetic flux generator 13, a heating unit 14, an ultrasonic wave generator 15, a laser light irradiation apparatus 16 and a high voltage discharging apparatus 17 supported each at least one on a heat exchange cell 18 in a closely contacting relationship with an exchangeable intermediate portion 11a of the electrode 11. The excitation unit 10 further includes a thermoelectric converter 19 provided on an outer portion of the heat exchange cell 18. The electrode 11 extends through a mid portion of the heat exchange cell 18.

The battery 12 supplies power such that the electrode 11 acts as a negative electrode and includes a positive electrode 12a led out to the outside of the heat exchange cell 18 so that electric charge may be supplied from the outside of the heat exchange cell 18. Also the magnetic flux generator 13, heating unit 14, ultrasonic wave generator 15 and high voltage discharging apparatus 17 have, though not shown, power source terminals let out to the outside of the heat exchange cell 18 so that power may be supplied to them from the outside of the heat exchange cell 18. The ultrasonic wave generator 15 includes a magnetostriction oscillator 20 for producing electromagnetic oscillations at a portion of the electrode 11 in a direction perpendicular to an axial line of the electrode 11, and a capacitor 21 electrically connected in parallel to the electrode 11 for flowing induction current caused by such oscillations into the electrode 11. The laser light irradiation apparatus 16 irradiates laser light from a high output laser generator 22 provided outside the heat exchange cell 18 upon a portion of the electrode 11 by way of an optical fiber 23. In this instance, if the laser light is irradiated as pulse light of a short interval upon the electrode 11, then electrons are emitted by a photoelectric effect from the electrode 11 so that the operation of the electrode 11 can be made active and also atoms of the electrode 11 can be oscillated. Further, by raising the output energy of the laser light as high as possible, also a nuclear fusion reaction by implosion can be anticipated, and if ultraviolet laser light is irradiated, then molecules of the electrode 11 can be destroyed to induce cracks. The high voltage discharging apparatus 17 causes spark discharge between a discharge electrode 17a to which a high voltage is applied and another discharge electrode 17b on the electrode 11 side opposing to the discharge electrode 17a.

The heat exchange cell 18 is made of a material having a high thermal conductivity and having a strength sufficient to mechanically protect the battery 12, magnetic flux generator 13, heating unit 14, ultrasonic wave generator 15, high voltage discharging apparatus 17 and optical fiber 23, such as, for example, copper. The heat exchange cell 18 has a hollow structure so that a heat medium such as water can be circulated in the inside thereof, and by supplying a heat medium such as water into the heat exchange cell 18 through an entrance 18a of the heat exchange cell 18 and discharging the heat medium from an exit 18b of the heat exchange cell 18, heat generated by nuclear fusion can be taken out to the outside. The thermoelectric converter 19 is constituted, for example, from a thermocouple and can convert heat into electric energy to be extracted outside.

A pair of magnetic coils 24 are disposed around the electrode 11 on the opposite sides of the intermediate portion 11a of the electrode 11. If electric current is supplied to the magnetic coils 24, then magnetic fields in which magnetic fluxes flow in a longitudinal direction of the electrode 11 are formed around the electrode 11. Consequently, the substance for nuclear fusion such as heavy water atoms occluded in the electrode 11 is enclosed in the electrode 11 by the magnetic fields. It is to be noted that permanent magnets may be employed in place of the magnetic coils 24.

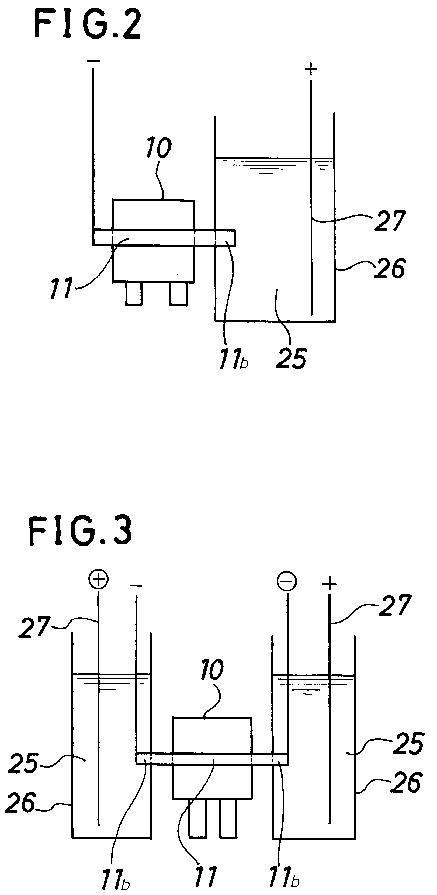

FIG. 2 shows a cold nuclear fusion apparatus according to a first embodiment of the present invention in which the excitation unit 10 of the construction described above is incorporated. Referring to FIG. 2, in the cold nuclear fusion apparatus shown, a single electrolytic cell 26 in which heavy water 25 is enclosed is employed as a reaction vessel, and the excitation unit 10 is installed outside the electrolytic cell 26. The electrode 11 is positioned, only at an end portion 11b thereof, in the electrolytic cell 26 and is used as a cathode. A dc voltage or a pulse voltage is applied between the cathode and an anode 27 made of a metal such as platinum to electrolyse the heavy water 25.

In the cold nuclear fusion apparatus shown in FIG. 2, if a dc voltage or a pulse voltage is applied between the electrode (cathode) 11 and the anode 27, then deuterium atoms are occluded into the electrode 11 by way of the end portion 11b of the electrode 11. Then, the thus occluded deuterium atoms undergo, outside the electrolytic cell 26, the following actions from the battery 12, magnetic flux generator 13, heating unit 14, ultrasonic wave generator 15, laser light irradiation apparatus 16 and high voltage discharging apparatus 17 shown in FIG. 1.

Since the battery 12 employs part of the electrode 11 as a negative electrode, electrons having negative charge are provided from the battery 12 to the electrode 11, and consequently, the amount of electrons in the electrode 11 is a total of electrons originally possessed by the electrode 11 itself and electrons provided from the battery 12. Due to the increase of the amount of electrodes, the screening effect on deuterium atomic nuclei is raised.

The magnetic flux generator 13 concentrates, due to its magnetic force, electrons upon the intermediate portion 11a of the electrode 11 to raise the density of electrons there to promote the screening effect on deuterium atomic nuclei.

The heating unit 14 heats the intermediate portion 11a of the electrode 11 to make the motion of deuterium atomic nuclei and electrons active.

The ultrasonic wave generator 15 electromagnetically oscillates the intermediate portion 11a of the electrode 11 to make the motion of deuterium atomic nuclei and electrons active. Further, since secondary induced currents produced by the electrode 11 and the capacitor 21 flow alternately in the axial direction of the electrode 11, the motion of electrons in the electrode 11 is further made active.

The laser light irradiation apparatus 16 irradiates laser light upon the intermediate portion 11a of the electrode 11 to cause emission of electrons due to its photoelectric effect to make the motion of electrons active to raise the screening effect. Further, occurrence of a nuclear fusion action is promoted also by the energy of the laser light.

The high voltage discharge apparatus 17 causes, due to its high voltage discharging, abnormal current to flow in the inside of the intermediate portion 11a of the electrode 11 to make the motion of electrons active and also to induce cracks and so forth by an impact caused by discharging.

Then, as such actions as described above occur at a time and synergetically, the probability that the quantum tunneling effect may occur rises and a nuclear fusion reaction of deuterium atomic nuclei is promoted. Since the intermediate portion 11a of the electrode 11 is exchangeable, if the intermediate portion 11a is broken or deformed by nuclear fusion, then the cold nuclear fusion apparatus can be used economically by exchanging only the intermediate portion 11a.

FIG. 3 shows a cold nuclear fusion apparatus according to a second preferred embodiment of the present invention. Referring to FIG. 3, the cold nuclear fusion apparatus shown is a modification to and is somewhat different from the cold nuclear fusion apparatus of the first embodiment described above with reference to FIG. 2, and only such differences will be described while overlapping description of the common construction is omitted herein to avoid redundancy. This also applies to the other embodiments described hereinbelow.

In the present cold nuclear fusion apparatus, a pair of electrolytic cells 26 in which heavy water 25 is accommodated are used, and the excitation unit 10 is installed between and outside the electrolytic cells 26. The electrode 11 is positioned only at the opposite end portions 11b thereof in the electrolytic cells 26 on the opposite sides such that it is used as a cathode common to the two electrolytic cells 26. An anode 27 is disposed in each of the electrolytic cells 26.

In the cold nuclear fusion apparatus of the second embodiment, if dc voltages or pulse voltages are applied between the anode 27 of the electrolytic cell 26 on the left side in FIG. 3 and the right end portion 11b of the electrode 11 positioned in the electrolytic cell 26 on the right side and between the anode 27 of the electrolytic cell 26 on the right side and the left end portion 11b of the electrode 11 positioned in the electrolytic cell 26 on the left side, then deuterium atoms are occluded from the opposite end portions 11b of the electrode 11 in the two electrolytic cells 26. The deuterium atomic nuclei which have been occluded from the opposite sides and electrodes emitted thereupon are collected to the intermediate portion 11a of the electrode 11 by the excitation unit 10 and undergo such actions as described hereinabove from the battery 12, magnetic flux generator 13, heating unit 14, ultrasonic wave generator 15, laser light irradiation apparatus 16 and high voltage discharging apparatus 17. The present cold nuclear fusion apparatus exhibits a higher nuclear fusion reaction efficiency than the cold nuclear fusion apparatus of the first embodiment since deuterium atoms are occluded from the opposite sides of the electrode 11 to collect deuterium atomic nuclei to the intermediate portion 11a of the electrode 11.

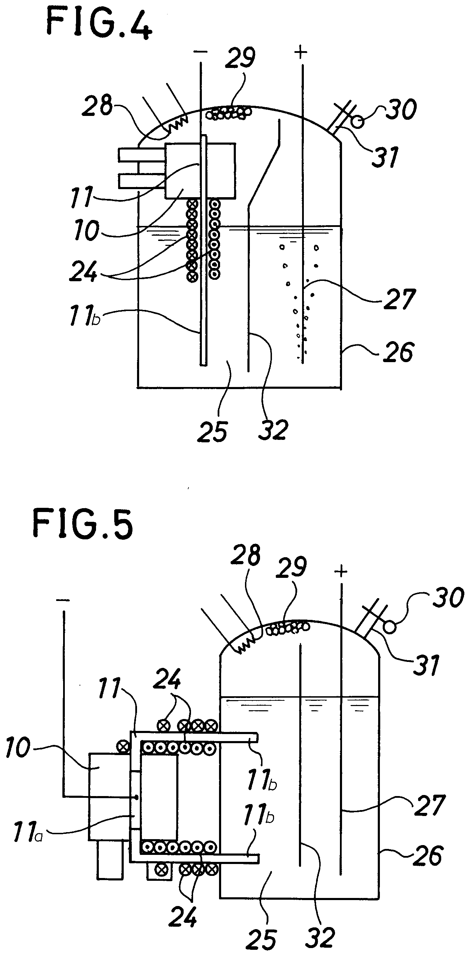

FIG. 4 shows a cold nuclear fusion apparatus according to a third preferred embodiment of the present invention. Referring to FIG. 4, in the present nuclear fusion apparatus, the excitation unit 10 is disposed in an electrolytic tank 26 together with the electrode 11, and a lower portion 11b of the electrode 11 and a portion of a magnetic coil 24 which serves as confinement means are immersed in the heavy water 25. Further, the top of the electrolytic cell 26 is closed so that gas produced by electrolysis may not be discharged as it is to the outside of the electrolytic cell 26, and a firing unit 28 and a reducing agent 29 are provided on the closed top of the electrolytic cell 26 so that deuterium gas produced on the electrode (cathode) 11 side and oxygen gas produced on the anode 27 side may make reduction reaction by them, respectively. In this instance, in order to discharge only surplus oxygen gas after reduction reaction to the outside, a vent hole 31 having a gas breeding control valve 30 may be provided at the ceiling of the electrolytic cell 26, and in order to introduce gas on the cathode 11 side and gas on the anode 27 side separately to upper locations within the electrolytic cell 26, a partition or barrier 32 may be provided in the electrolytic cell 26.

FIG. 5 shows a cold nuclear fusion apparatus according to a fourth preferred embodiment of the present invention. The present cold nuclear fusion apparatus is different from the cold nuclear fusion apparatus of the third embodiment described hereinabove with reference to FIG. 4 in that the excitation unit 10 is disposed outside the electrolytic cell 26 and the electrode 11 is extended from the opposite sides of the excitation unit 10 until the perpendicularly bent opposite end portions 11b thereof project into the electrode cell 26 so that deuterium atoms may be occluded from the opposite end portions 11b of the electrode 11.

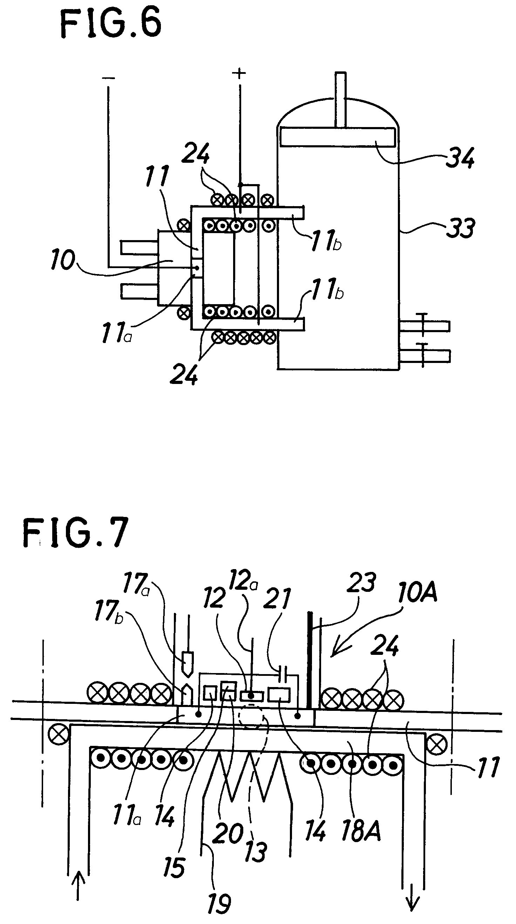

FIG. 6 shows a cold nuclear fusion apparatus according to a fifth preferred embodiment of the present invention. Referring to FIG. 6, in the cold nuclear fusion apparatus shown, since deuterium gas is employed in place of heavy water, a closed cell 33 for enclosing gas is used as a reaction vessel and the excitation unit 10 is disposed outside the enclosed cell 33, and the electrode 11 is extended from the opposite sides of the excitation unit 10 such that the perpendicularly bent opposite end portions 11b thereof are positioned in the enclosed cell 33. A piston 34 is provided in the enclosed cell 33, and a gas bomb or a vacuum pump not shown can be connected to the closed cell 33.

In order to cause a nuclear fusion reaction to occur in the cold nuclear fusion apparatus of the fifth embodiment, the inside of the closed cell 33 is first put into a vacuum condition by the vacuum pump, and then deuterium gas is fed from the gas bomb into the closed cell 33, whereafter the deuterium gas is put into a fixed pressurized condition by the piston 34. Then, a voltage is applied to the electrode 11 such that the intermediate portion 11a of the electrode 11 acts as a cathode and the opposite end portions 11b of the electrode 11 acts as anodes so that deuterium atoms are occluded from the opposite end portions 11b of the electrode 11 and deuterium atomic nuclei are collected to the intermediate portion 11a of the electrode 11 by the excitation unit 10 to promote a nuclear fusion reaction.

It is to be noted that, while the embodiments described above are shown constructed such that they include all of the battery 12, magnetic flux generator 13, heating unit 14, ultrasonic wave generator 15, laser light irradiation apparatus 16 and high voltage discharging apparatus 17, all of them need not necessarily be provided, but those components having a high effect to promote a nuclear fusion reaction should preferentially be provided.

Meanwhile, the excitation unit may alternatively have such a structure as shown in FIG. 7. Referring to FIG. 7, the excitation unit generally denoted at 10A is a modification to and is different from the excitation unit 10 shown in FIG. 1 in that it includes, in place of the heat exchange cell 18 shown in FIG. 1, a heat exchange 18A in which a heat medium such as water can be circulated, and the heat exchange pipe 18A is disposed, at a portion thereof, along the electrode 11 while the magnetic coil 24 is disposed around the electrode 11 and the portion of the heat exchange pipe 18A.

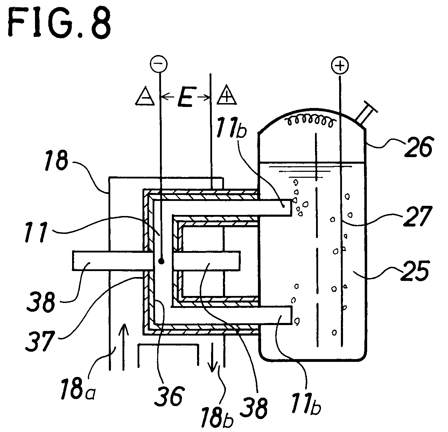

FIG. 8 shows a cold nuclear fusion apparatus according to a sixth preferred embodiment of the present invention. Referring to FIG. 8, the present cold nuclear fusion apparatus is characterized in confinement means for preventing a substance for nuclear fusion occluded in the electrode 11 from escaping from the electrode 11. In particular, the electrode 11 is formed such that it has a generally U-shaped configuration, and an electric insulator layer 36 is formed on an outer periphery of the electrode 11 leaving the opposite end portions 11b and a conductor layer 37 is formed on the electric insulator layer 36. The electrode 11 is immersed only at the opposite end portions 11b thereof in the heavy water 25 through a side wall of the electrolytic cell 26, but is positioned, at the most remaining portion thereof, outside the electrolytic cell 26. The anode 27 is installed in the electrolytic cell 26 similarly as shown in FIG. 5. Thus, a voltage is applied between the electrode 11 and the anode 27 in the electrolytic cell 26 such that the electrode 11 acts as a cathode so that deuterium atoms are occluded only from the opposite end portions 11b of the electrode 11, and separately from this, a voltage E is applied outside the electrolytic cell 26 between the electrode 11 and the conductor layer 37 such that the electrode 11 acts as a cathode and the conductor layer 37 acts as an anode. By applying the voltage E, deuterium atoms occluded in the electrode 11 and atomic nuclei from which electrons have been emitted upon such occlusion are prevented from escaping to the outside of the electrode 11 by a physical action as well as an electrostatic action of the electric insulator layer 36. The electric insulator layer 36 may be formed, for example, from a ceramic material having a high electric insulation property and a high heat resisting property, and the conductor layer 37 may be formed from a metal such as aluminum.

In the cold nuclear fusion apparatus of the sixth embodiment of FIG. 8, a portion on which the electric insulator layer 36 and the conductor layer 37 are not present may be provided at an intermediate portion of the electrode 11, and such excitation means 38 as described above may be provided at the portion of the electrode 11 in an opposing relationship.

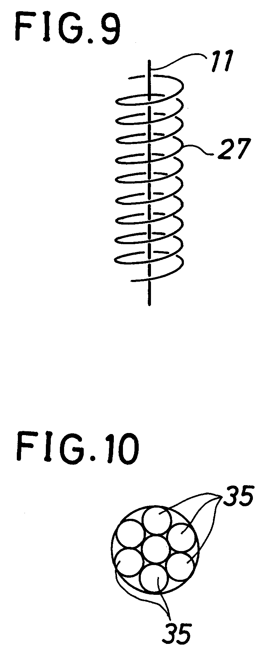

The confinement means may alternatively be constituted from, where the electrode 11 acts as a cathode, the anode 27 which is formed as a coil and provided around the cathode 11 as shown in FIG. 9. In this instance, coils of the anode 27 should be wound densely in its axial direction.

Further, the occlusion member for occluding a substance for nuclear fusion may be such a member as shown in FIG. 10. Referring to FIG. 10, the occlusion member includes a plurality of occlusion substance wires or plates 35 of different materials twisted or piled up together. Where such occlusion member is employed, when stress is produced in the occlusion member, cracks can be induced due to a difference in stress between the occlusion substance wires or plates 35. In order to increase production of cracks, pressurizing means for continuously or intermittently applying an external force within an elastic limit to the occlusion member may be provided separately.

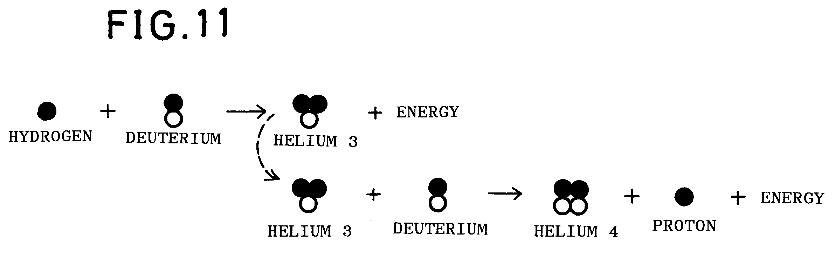

Further, if a mixture of water and heavy water or a mixture of light hydrogen gas or deuterium gas is employed as the substance for nuclear fusion, then a nuclear fusion reaction of such a model as illustrated in FIG. 11 wherein no neutron is generated may possibly take place.

Having now fully described the invention, it will be apparent to one of ordinary skill in the art that many changes and modifications can be made thereto without departing from the spirit and scope of the invention as set forth herein.

## Claims

1. A cold nuclear fusion apparatus wherein a substance for nuclear fusion is occluded into an occlusion member accommodated in a reaction vessel to cause a nuclear fusion reaction, characterized in that it comprises excitation means (10; 10A) disposed in close contact with a portion of said occlusion member (11) for promoting the nuclear fusion reaction of the substance for nuclear reaction occluded in said occlusion member (11) from the outside.

2. A cold nuclear fusion apparatus as set forth in claim 1, characterized in that said excitation means (10; 10A) includes one or more of a battery (12), a magnetic flux generator (13), a heating apparatus (14), an ultrasonic wave generator (15), a laser light irradiation apparatus (16) and a high voltage discharging apparatus (17).

3. A cold nuclear fusion apparatus as set forth in claim 1, characterized in that a portion of said occlusion member (11) is disposed outside said reaction vessel (26; 33), and said excitation means (10; 10A) closely contacts with the portion of said occlusion member (11) outside said reaction vessel (26: 33).

4. A cold nuclear fusion apparatus as set forth in claim 1, characterized in that said reaction vessel (26) is provided by a pair together with said occlusion member (11b), and the occlusion members (1b) are connected to each other outside the reaction vessels (26) while said excitation means (10) closely contacts with the connection portion (11) between the occlusion members (11b).

5. A cold nuclear fusion apparatus as set forth in claim 1, characterized in that a portion (11a) of said occlusion member (11) is exchangeable, and said excitation means (10; 10A) closely contacts with the exchangeable portion (11a) of said occlusion member (11).

6. A cold nuclear fusion apparatus as set forth in claim 1, further comprising heat exchange means (18; 18A) provided around said occlusion member (11).

7. A cold nuclear fusion apparatus as set forth in claim 6, characterized in that said heat exchange means (18; 18A) includes a thermoelectric converter (19).

8. A cold nuclear fusion apparatus as set forth in claim 1, characterized in that said reaction vessel (26) includes an electrolytic cell (26) in which said occlusion member (11) acts as a cathode, and further comprising reduction reaction means (29) provided in said electrolytic cell (26) for causing gas produced on the anode side of said electrolytic cell (26) to react with gas produced on the cathode side by reduction reaction.

9. A cold nuclear fusion apparatus as set forth in claim 1, characterized in that said occlusion member (11) is constituted from a plurality of occlusion substance wires or plates (3) of different materials combined together.

10. A cold nuclear fusion apparatus as set forth in claim 1, characterized in that the substance for nuclear fusion is a mixture (25) of water and heavy water.

11. A cold nuclear fusion apparatus as set forth in claim 1, characterized in that the substance for nuclear fusion is a mixture of high hydrogen gas and deuterium gas.

12. A cold nuclear fusion apparatus as set forth in claim 1, further comprising confinement means for preventing the substance for nuclear fusion occluded in said occlusion member (11) from escaping to the outside of said occlusion member (11).

13. A cold nuclear fusion apparatus as set forth in claim 12, characterized in that said confinement means includes a conductor layer (37) formed on an outer periphery of said occlusion member (11), which acts as a cathode, with an electric insulator layer (36) interposed therebetween, a voltage being applied such that said conductor layer (37) acts as an anode.

14. A cold nuclear fusion apparatus as set forth in claim 12, characterized in that said confinement means includes a magnetic coil (24).

15. A cold nuclear fusion apparatus as set forth in claim 12, characterized in that said confinement means includes an anode (27) in the form of a coil provided around said occlusion member (11) which acts as a cathode.
